(19) Europäisches Patentamt / European Patent Office / Office européen des brevets

(11) **EP 2 317 299 A1**

(12) **EUROPÄISCHE PATENTANMELDUNG**

(43) Veröffentlichungstag:
04.05.2011 Patentblatt 2011/18

(51) Int Cl.:
*G01M 3/26* (2006.01)      *B01L 3/02* (2006.01)
*G01N 35/10* (2006.01)

(21) Anmeldenummer: 09013570.8

(22) Anmeldetag: 28.10.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR
Benannte Erstreckungsstaaten:
AL BA RS

(71) Anmelder: **BRAND GMBH + CO KG**
**97877 Wertheim (DE)**

(72) Erfinder:
• **Feldmann, Rainer**
  **97222 Rimpar (DE)**
• **Ettig, Wolfgang**
  **97900 Külsheim (DE)**

(74) Vertreter: **Gesthuysen, von Rohr & Eggert**
**Patentanwälte**
**Huyssenallee 100**
**45128 Essen (DE)**

(54) **Verfahren zur Dichtigkeitsprüfung von handgehaltenen Kolbenhubpipetten sowie Dichtigkeits-Prüfeinrichtung dafür**

(57)      Gegenstand der Erfindung ist ein Verfahren zur Dichtigkeitsprüfung von handgehaltenen Kolbenhubpipetten und eine entsprechende Dichtigkeits-Prüfeinrichtung. Wesentlich für das System ist eine Aufnahme (8) zum abgedichteten Anschließen einer Pipettenspitze (3) an die Dichtigkeits-Prüfeinrichtung. Ein Leitungssystem (9) mit anschließenden Abschnitten der Dichtigkeits-Prüfeinrichtung bildet ein bestimmtes Anschlussvolumen.

Die Pipettenspitze (3) wird auf einen Messdruck unterhalb des Atmosphärendrucks evakuiert. Bei abgekoppelter Vakuumpumpe (5) und abgedichtetem Anschlussvolumen wird der Druck über eine bestimmte Zeitspanne gemessen, ein eventueller Druckanstieg wird ermittelt, Aus dem ermittelten Druckanstieg wird eine Anzeige der Funktionsfähigkeit der Pipette (2) generiert.

EP 2 317 299 A1

**Beschreibung**

Die Erfindung betrifft ein Verfahren zur Dichtigkeitsprüfung von handgehallenen, einkanaligen oder mehrkanaligen Kolbenhubpipetten, vorzugsweise von solchen mit Luftpolster. Gegenstand der Erfindung ist auch eine für die Durchführung eines solchen Verfahrens geeignete Dichtigkeits-Prüfeinrichtung. Gegenstand der Erfindung ist schließlich ein System, das eine entsprechende Dichtigkeits-Prüfeinrichtung einschließt.

Kolbenhubpipetten sind als handgehaltene einkanalige Messvorrichtungen (DE 39 03 241 A1) ebenso bekannt wie als mehrkanalige Messvorrichtungen (DE 100 13 511 A1). Beim Aufsaugvorgang von Probenflüssigkeit wird in der Kolbenhubpipette und in der auf einen Aufsteckabschnitt der Pipette aufgesteckten Pipettenspitze ein Unterdruck erzeugt. Durch diesen Unterdruck wird Probenflüssigkeit in die Pipettenspitze eingesaugt. Kolbenhubpipetten als Direktverdränger haben kein oder nur ein minimales Luftvolumen oberhalb des Flüssigkeitsspiegels in der Pipettenspitze. Sie sind weniger für biologische Proben geeignet, da dort überwiegend kontaminationsfrei gearbeitet werden muss. Verbreiteter sind daher Luftpolster-Kolbenhubpipetten, bei denen sich zwischen dem Boden des Kolbens und dem Flüssigkeitsspiegel ein solcher Abstand befindet, dass sich der Flüssigkeitsspiegel stets nur in der auswechselbaren und meist als Wegwerfteil ausgeführten Pipettenspitze befindet, während sich der Kolbenboden deutlich oberhalb des Flüssigkeitsspiegels und damit gegen Kontaminationen geschützt bewegt.

Bei Kolbenhubpipetten und insbesondere bei Luftpolster-Kolbenhubpipetten ist die Anforderung an die Dichtigkeit aller Verbindungsstellen der Pipette und Pipettenspitze sehr hoch. Durch den Differenzdruck beim Einsaugen kann über ein Leck ungewollt Luft in den Totraum oberhalb des Flüssigkeitsspiegels einströmen. Das durch den Kolbenhub vergrößerte Volumen stimmt dann rücht mehr mit dem tatsächlich veränderten Volumen überein.

Die Dichtstellen von Kolbenhubpipetten unterliegen im Betrieb einem Verschleiß. Auch Alterung, Chemikalienangriff und sonstige Umgebungseinflüsse wirken sich negativ aus, selbst bei statischen Dichtungen. Eine besonders empfindliche Dichtstelle, neben der dynamischen Kolbendichtung, stellt die Verbindung zwischen Pipettenspitze und Pipette am Aufsteckabschnitt dar. Gerade bei handgehaltenen Kolbenhubpipetten erfolgt der Aufsteckvorgang der Pipettenspitze manuell und im Wesentlichen freihändig. Die Oberflächen von Aufsteckabschnitt und Pipettenspitze werden dabei stark beansprucht. Außerdem werden immer wieder neue Pipettenspitzen eingesetzt (Wegwerfteil), so dass sich die Fertigungstoleranzen der Pipettenspitzen und die Oberflächenqualität der Dichtflächen der Pipettenspitzen bemerkbar machen. Im Ergebnis entstehen am Aufsteckabschnitt der Pipette nach längerem Gebrauch Riefen, die letztlich zu einem Leck führen können. Charakteristikum für Kolbenhubpipetten ist daher eine schleichend ansteigende Undichtigkeit.

Nicht jede Undichtigkeit führt zur Funktionsumfähigkeit einer Kolbenhubpipette. Eine sehr geringe Undichtigkeit kann hingenommen werden. Hat das Leck nur einen sehr geringen Strömungsquerschnitt, so strömt Luft nur sehr langsam in das Totvolumen der Pipette, und die Undichtigkeit kann noch im Rahmen der akzeptablen Fehlertoleranz sein.

Für Kolbenhubpipetten gehört es somit zu dem normalen Laborbetrieb, dass die Pipetten von Zeit zu Zeit einer Dichtigkeitsprüfung unterzogen werden. Das ist unabhängig davon, ob es sich um handgehaltene Kolbenhubpipetten oder um automatische Pipettiervorrichtungen handelt. Auch bei letzteren besteht ja ein entsprechendes Risiko von Lecks, sogar umso mehr als die Beobachtung eingeschränkt oder gar nicht möglich ist.

Für automatische Pipettiervorrichtungen hat man früher nur eine optische Prüfung der Dichtigkeit vorgenommen, die lediglich in der Lage war grobe Lecks zu ermitteln, Nach diesen althergebrachten Verfahren wird der Betrieb der automatischen Pipettiervorrichtung zeitweilig angehalten, nachdem die Pipettenspitze, in die die Probenflüssigkeit eingesaugt worden ist, von dem Flüssigkeitsspiegel nach oben bewegt worden ist. Ein Bediener prüft visuell, ob Probenflüssigkeit von der Pipettenspitze abtropft. Für dieses Verfahren bedarf es einer großen Erfahrung des Bedieners, Außerdem ist dieses Verfahren nur für große Lecks und große Flüssigkeitsmengen anwendbar. Bei kleinen Volumina der Probenflüssigkeit, beispielsweise von 10 μl, versagt dieses Verfahren.

Für eine automatische Pipettiervorrichtung ist daher bereits ein automatisiertes Verfahren zur Dichtigkeitsprüfung vorgeschlagen worden (DE 693 26 773 T2), bei dem der in der Pipettiervorrichtung, also im Totvolumen von Pipette und Pipettenspitze herrschende Druck in verschiedenen Pipettierzuständen gemessen und ausgewertet wird. Dazu ist die Pipettiervorrichtung selbst mit einem Drucksensor versehen, der den Druck im Totvolumen zwischen Flüssigkeitsspiegel und Kolbenboden der Kolbenpumpe der Pipette erfasst. Durch eine elektronische Steuereinrichtung wird der von dem Drucksensor erfasste Innendruck nach dem Ansaugen der Probenflüssigkeit mit dem Atmosphärendruck der Umgebungsatmosphäre verglichen. Dadurch lässt sich ein großes Leck feststellen, das das Ansaugen der Probenflüssigkeit mehr oder weniger vollständig unmöglich macht. In einem zweiten Schritt wird der Innendruck bei angehaltener Kolbenpumpe nach einer bestimmten Zeitspanne gemessen und mit dem unmittelbar nach dem Ende des Ansaugens herrschenden Innendruck verglichen. Abhängig von dem in diesem Verfahren ermittelten Druckanstieg wird eine Leckwarnung für die automatische Pipettiervorrichtung ausgegeben oder die automatische Pipettiervorrichtung für weiteres präzises Pipettieren freigegeben.

Bei dem zuvor erläuterten, bekannten Verfahren zur Dichtigkeitsprüfung bei einer automatischen Pipettiervorrichtung sind typische Volumina der eingesaugten Probenflüssigkeit während der Dichtigkeitsprüfung 200 bis 500 μl

destilliertes Wasser. Die Zeitspanne, während der Druck im Totvolumen der Pipette gemessen wird, ist typischerweise 30 s verglichen mit der ersten Messung unmittelbar nach dem Anhalten der Pumpe nach etwa 500 ms. Über Druckverhältnisse lässt sich diese Literaturstelle nicht aus.

Ein Verfahren zur Dichtigkeitsprüfung bei automatischen Pipettiervorrichtungen ist auf handgehaltene Kolbenhubpipetten, vorzugsweise Luftpolster-Kolbenhubpipetten, nicht übertragbar. Dazu müsste die Pipette selbst mit einer entsprechenden Dichtigkeits-Prüfeinrichtung ausgerüstet werden. Das ist kostenmäßig nicht zu rechtfertigen und würde am Markt keine Akzeptanz finden. Aus diesem Grunde arbeitet man bei handgehaltenen Kolbenhubpipetten mit manuellen Verfahren zur Dichtigkeitsprüfung, die extern ausgeführt werden können.

Bei einem bekannten Verfahren (Eppendorf, Pipettentester 4708) werden eine Flüssigkeit bevorratende Flasche, ein damit verbundener befüllter Schlauch und ein Adapter eingesetzt. Der Adapter wird mit der aufgesteckten Pipettenspitze verbunden. Die Pipette mit Pipettenspitze wird in die Höhe gehalten. Der sich einpendelnde Flüssigkeitsspiegel wird markiert. Nach mehreren Betätigungen des Kolbens der Pipette wird die Position des Flüssigkeitsspiegels erneut geprüft, wobei die Pipette exakt in gleicher Höhe gehalten werden muss. Hat sich der Flüssigkeitsspiegel bei einem tieferen Niveau eingestellt, so ist das System aus Pipette und Pipettenspitze undicht.

Bekannt ist auch ein weiteres, ähnliches Verfahren. Bei diesem wird an die auf der Pipette aufgesteckte Pipettenspitze ein Schlauch angeschlossen, der zu einer Dichtigkeits-Prüfeinrichtung führt. Diese weist eine handbetätigte, Unterdruck erzeugende Kolbenpumpe sowie ein ansaugseitig an der Kolbenpumpe angeschlossenes, analog arbeitendes Manometer als Drucksensor auf. Die Vakuumpumpe wird von Hand betätigt, bis sich ein hinreichender Messdruck unterhalb des Atmosphärendrucks einstellt, der am Manometer angezeigt wird. In dieser Stellung versucht man, die Vakuumpumpe mit der Hand zu fixieren, so dass sich deren Pumpenvolumen nicht mehr ändert. Dann wird die Pipette mit der anderen Hand mehrfach betätigt. Zeigt danach das Manometer einen höheren Druck als vorher, so muss auf ein Leck im System aus Pipette und Pipettenspitze geschlossen werden.

1)as mit der zuvor erläuterten Vorrichtung durchgeführte Verfahren zur Dichtigkeitsprüfung von handgehaltenen, einkanaligen oder mehrkanaligen Kolbenhubpipetten, vorzugsweise solchen mit Luftpolster, stellt den Ausgangspunkt für die Lehre der vorliegenden Patentanmeldung dar.

Neben dem zuvor erläuterten bekannten Verfahren ist ein Verfahren bekannt, das mit einer besonderen Messpipette arbeitet (DE 82 30 186 U1). Hierbei wird eine Messpipette über einen Adapter mit der Pipette verbunden. Die Probenflüssigkeit wird direkt von der Messpipette aufgenommen, Auf deren Skala kann unmittelbar das aufgenommene Volumen abgelesen werden. Dieses kann mit dem an der Pipette eingestellten Sollwert verglichen werden. Bei diesem Verfahren ist nachteilig, dass das Luftpolster, also das Totvolumen, mit dem tatsächlich in der Pipette im Normalbetrieb vorhandenen Luftpolster nicht übereinstimmt. Auch der hydrostatische Druck der aufgenommenen Flüssigkeit ist größer. Folglich entspricht das Verfahren mit Anwendung der Messpipette nicht dem tatsächlichen Verfahren beim Arbeiten mit der Pipette selbst.

Untersuchungen haben ergeben, dass beim Pipettieren mit unterschiedlichen Pipetten und Pipettenspitzen unterschiedliche Parameter auftreten, die die Ergebnisse der Dichtigkeitsprüfung in weiten Grenzen beeinflussen. Der Bediener muss durch Erfahrung herausfinden, welche Parameter in welchem Maße einzuhalten sind. Ein solcher Parameter ist der sich minimal bildende Unterdruck unterhalb des Atmosphärendrucks beim Ansaugvorgang (siehe die Erläuterung der DE 39 03 142 A1). Die Viskosität der Probenflüssigkeit, die Stärke der auf den Kolben der Kolbenpumpe wirkenden Rückstellfeder und der Strömungsquerschnitt der Pipettenspitze beeinflussen den sich einstellenden Unterdruck. Mindestens mit diesem Druck sollte die Pipette geprüft werden, um die an einem Leck einströmende Gasmenge korrekt und in für die Praxis geeigneter Weise zu erfassen. Eine weitere Größe ist der Druckanstieg über eine bestimmte Zeitspanne. Diese ist abhängig von der Größe des Totvolumens in der Einheit aus Pipette und Pipettenspitze während der Dichtigkeitsprüfung. Selbst das eingangs erläuterte Verfahren zur Dichtigkeitsprüfung bei einer automatischen Pipettiervorrichtung berücksichtigt diese Größe nicht. Folglich muss selbst dort sicherheitshalber ein unterster Grenzwert vorgegeben werden. Das Ergebnis ist, dass auch Pipetten bereits gewartet werden, die tatsächlich noch nicht gebrauchsuntüchtig sind.

Der Lehre liegt nun das Problem zugrunde, ein Verfahren zur Dichtigkeitsprüfung von handgehaltenen Kolbenhubpipetten anzugeben, das eine verlässliche und von der Qualifikation des Bedieners unabhängigere Dichtigkeitsprüfung derartiger Kolbenhubpipetten erlaubt. Die Problemstellung ist auch auf die Angabe einer entsprechenden Dichtigkeits-Prüfeinrichtung für dort anzukoppelnde handgehaltene Kolbenhubpipetten gerichtet sowie auf ein diesbezügliches System.

In verfahrensmäßiger Hinsicht wird das zuvor erläuterte Problem mittels des Verfahrens gemäß Anspruch 1 gelöst, Vorteilhafte Ausgestaltungen und Weiterbildungen sind Gegenstand der Ansprüche 2 bis 9.

In vorrichtungsmäßiger Hinsicht wird das zuvor erläuterte Problem durch eine Dichtigkeits-Prüfeinrichtung mit den Merkmalen von Anspruch 10 gelöst. Insoweit sind bevorzugte Ausgestaltungen und Weiterbildungen Gegenstand der Ansprüche 11 bis 14.

Schließlich wird das zuvor erläuterte Problem durch ein System gemäß Anspruch 15 gelöst.

Aufgrund seiner Ausgestaltung kann das erfindungsgemäße Verfahren außerhalb der handgehaltenen Kolbenhubpipette auf Basis einer separaten Dichtigkeits-Prüfeinrichtung ablaufen, an die die Kolbenhubpipette mit aufgesteckter Pipettenspitze angeschlossen wird. Die Pipette und ein Anschlussvolumen in der Prüfvorrichtung werden auf einen Messdruck unterhalb des Atmosphärendrucks evakuiert. Bei angehaltener oder abgekoppelter Vakuumpumpe wird nach einer bestimmten Zeitspanne mittels eines Drucksensors ein eventueller Druckanstieg im Anschlussvolumen gemessen, Das Verfahren kann auf zwei unterschiedliche Arten durchgeführt werden.

Im einen Fall wird nach Ermittlung des Druckanstiegs mittels der Anzeigeeinrichtung die Pipette unmittelbar als hinreichend dicht/gebrauchsfertig oder nicht hinreichend dicht/nicht gebrauchsfertig bewertet, Dieses Verfahren erfordert beim Bediener eine Kenntnis des zulässigen Druckanstiegs der geprüften Kolbenhubpipette mit der aufgesteckten Pipettenspitze und/oder eine digiiale Anzeige.

Die andere Variante des Verfahrens automatisiert auch den Abgleichvorgang dahingehend, dass der im Verfahrensschritt d) ermittelte Druckanstieg mittels einer elektronischen Steuereinrichtung mit einem in deren Datenspeicher gespeicherten Referenzwert oder bei einem kontinuierlichen Verlauf mit gespeicherten Referenzwerten verglichen wird. Diese Werte gelten dann für die jeweils zu prüfende Pipette, für eine Pipettengruppe und/oder für bestimmte Pipettenspitzen bestimmter Volumina oder einer bestimmten Volumengruppe. Abhängig vom Ergebnis dieses Vergleichs wird die Pipette dann, ggf. auch automatisch, als hinreichend dicht/gebrauchsfähig oder nicht hinreichend dicht/nicht gebrauchsfähig bewertet.

Mit dem erfindungsgemäßen Verfahren ist eine sichere und schnelle Überprüfung der Funktionsfähigkeit von Pipetten gegeben. Bereits eine sich anbahnende Undichtigkeit einer Pipette kann registriert werden. Der Bediener kann rechtzeitig für Ersatz und/oder Reparatur sorgen. Über Prüfintervalle lässt sich auch statistisch eine Ausfallwahrscheinlichkeit für Pipetten eines bestimmten Pipettentyps ermitteln. Im einfachsten Fall erfolgt die Steuerung manuell und der Drucksensor ist direkt mit der Anzeigeeinrichtung gekoppelt, die die Funktionszustände der geprüften Kolbenhubpipette digital anzeigt. Eher wird man allerdings mit einer elektronischen Steuereinrichtung arbeiten, die die Auswertung übernimmt.

Hinsichtlich des im Anschlussvolumen der Dichtigkeits-Prüfeinrichtung zu messenden Druckanstiegs empfiehlt es sich, dass im Verfahrensschritt e) oder g) ein Druckanstieg von ca. 0,1 hPa bis ca. 50 hPa als zulässig bewertet wird. Der Druckanstieg ist abhängig von der Fehlergrenze der Pipetten und von deren Totvolumen und dem Anschlussvolumen. Dahingehend besteht kein proportionaler Zusammenhang mit dem Nennvolumen der Pipetten. Der zulässige Druckanstieg kann aus diesen Parameter berechnet werden und deren Grenzwert kann daraus festgelegt werde.

Besonders zweckmäßig ist eine Ausgestaltung, für die gilt, dass die Bewertung im Verfahrensschritt e) oder g) in diskreten Stufen erfolgt. Dies macht die Auswertung für den Bediener einfach. Er bekommt den Hinweis, dass die Pipette in Ordnung oder eben nicht in Ordnung ist.

Für die Auswertung empfiehlt es sich, dass die Bewertung im Verfahrensschritt e) oder g) mittels einer Anzeigeeinrichtung der Dichtigkeits-Prüfeinrichtung nur digital erfolgt. Insbesondere ist es auswertungstechnisch zweckmäßig, dass die Anzeige mittels der Anzeigeeinrichtung optisch, insbesondere mit verschiedenen Symbolen, Farben und/oder Leuchtmitteln, erfolgt. im Zuge der mehrstufigen Anzeige kann man beispielsweise vorsehen, dass die Stufe "grün" Druckanstiege bis zu einem bestimmten Prozentsatz des Grenzwertes, der Bereich "gelb" folgende Druckanstiege bis zum Grenzwert, die die Fehlergrenze noch nicht überschreiten lassen und Druckanstiege darüber dem Bereich "rot" zugeordnet sind.

Alternativ oder zusätzlich kann man auch vorsehen, dass die Anzeige mittels der Anzeigeeinrichtung akustisch, insbesondere mit Tönen unterschiedlicher Frequenz erfolgt, Eine akustische Anzeige hat den Vorteil, dass sie ohne weiteres Zutun des Bedieners wahrgenommen wird.

Für die Durchführung des erfindungsgemäßen Verfahrens zur Dichtigkeitsprüfung sind verschiedene Parameter von Interesse. Für eine praxisgerechte Prüfung hat es sich gezeigt, dass es zweckmäßig ist, wenn im Verfahrensschritt c) mit einem Messdruck von etwa 20 hPa bis etwa 300 hPa unter Atmosphärendruck gearbeitet wird. Für eine statische und vor allem bei einer dynamische Prüfung, d. h. ein mehrmaliges Betätigen der Kolbenhubpipette bei angelegtem Messdruck, sollte der Messdruck so gewählt werden, dass die Federkraft gegen die manuelle Kolbenbewegung nicht überwunden wird d. h. die Kolbenbewegung beim Ansaugen noch möglich ist.

Hinsichtlich der Zeitspanne für die Ermittlung des Druckanstiegs im Verfahrensschritt d) empfiehlt es sich, dass mit einer Zeitspanne von ca. 3 s bis ca. 60 s, insbesondere von ca. 5 s bis 20 s, gearbeitet wird.

Es ist nicht zu vermeiden, dass die Dichtigkeits-Prüfeinrichtung ein zusätzliches Gasvolumen hat, das Anschlussvolumen, das bei der Messung des Druckanstiegs Berücksichtigung finden muss, um die Messergebnisse richtig auszuwerten.

Den gesamten Bereich würde man wohl mit einem insoweit unveränderten Anschlussvolumen mittlerer Größe nicht abdecken können, weil unter Umständen die Messgenauigkeit des Drucksensors dann nicht ausreichen würde. Für einen breiteren Bereich könnte man auch an unterschiedliche Anschlussvolumina, die vielleicht über unterschiedliche Messkanäle bereitgestellt werden können, denken.

Es hat sich gezeigt, dass dieses Anschlussvolumen bei typischen Kolbenhub-Luftpolsterpipetten zweckmäßigerweise in einem bestimmten Größenbereich liegen sollte, um die Pipetten dynamisch prüfen zu können. Dabei wird der Kolben der Pipette verfahren und eine Luftmenge, die je nach Größe der Kolbenhubpipette erheblich sein kann, dem Anschlussvolumen der Dichtigkeits-Prüfeinrichtung zugeführt und wieder entnommen. Das Anschlussvolumen der Dichtigkeits-Prüfeinrichtung muss so bemessen sein, dass es beim Zuführen nicht zu einem Anstieg des Druckes über den Atmosphärendruck kommt. Ebenso gehen das einströmende Gasvolumen durch ein Leck bestimmter Größe, die zu erwartende Prüfzeit und die Anzahl der Betätigungen mit ein. Es ist auch zu beachten, dass durch das Zuführen oder Entnehmen von Luft während der dynamischen Prüfung eine zum Teil erhebliche Änderung des Messdruckes zustande kommt, die das Kriterium für den Druckanstieg im Anschlussvolumen beeinflusst. Es hat sich gezeigt, dass für Pipetten und Pipettenspitzen zwischen 10 $\mu$l und 10 ml zweckmäßigerweise mit einer Dichtigkeits-Prüfeinrichtung gearbeitet wird, deren Anschlussvolumen zwischen etwa 1,0 ml und etwa 200 ml beträgt. Das Anschlussvolumen wird dazu durch ein Zusatzvolumen vergrößert. Das Zusatzvolumen wird, insbesondere beim Evakuieren in Verfahrensschritt c), über ein Ventil zugeschaltet Es ist auch möglich mehrere und/oder unterschiedlich große Zusatzvolumina zuzuschalten, um das Auschlussvolumen auf das Totvolumen des zu prüfenden Systems Pipette/Pipettenspitze abzustimmen. Luftpolster-Kolbenhubpipetten sind bis hinunter zu 1 $\mu$l im Einsatz, die obere Volumengrenze liegt für übliche Kolbenhubpipetten derzeit wohl bei 10 ml. Insgesamt ist es so, dass sich das hier bezifferte Anschlussvolumen zum Totvolumen der Pipette mit Pipettenspitze addiert.

Das Gesamtvolumen wird beim Prüfen evakuiert und zumindest das Anschluss- und das Totvolumen der Pipette/Pipettenspitze wieder auf Atmosphärendruck belüftet. Vorteilhaft ist, wenn das Zusatzvolumen der Dichtigkeits-Prüfeinrichtung nach erstmaligem Evakuieren in Verfahrensschritt c) nicht mehr belüftet wird, um diese Zeit zu sparen. Um den Messdruck in den Leitungen und Komponenten zu stabilisieren, bedarf es überraschenderweise einer nicht unerheblichen weiteren Zeitspanne. Durch schnelles Evakuieren und Belüften entsteht eine adiabatische Temperaturdifferenz zwischen dem Gasvolumen und Leitungssystem, die zu einer Drift im Messdruck führt und nur vor dem Verfahrensschritt d) im Prüfvorgang durch die weitere Zeitspanne ausgeglichen werden kann. Beim Zuschalten der bereits evakuierten Zusatzvolumina verringert sich dieser Zeitbedarf gegen Null.

Überraschenderweise konnte dieser Zeitbedarf zumindest beim erstmaligen Evakuieren auch durch eine die Temperatur des Gasvolumens stabilisierende Masse, im Ansohluss- und/oder Zusatzvolumen angeordnet, reduziert werden. Die Prüfzeit verringert sich erheblich, wenn die Masse ein Oberflächen/Volumen-Verhältnis größer als 3 hat, und um Größenordnungen, wenn das Verhältnis größer als 20 ist. Die Masse kann nicht nur als zusätzliches Bauelement ausgeführt sein, sondern auch durch eine besondere, gleichartige Formgebung der Innenwände erzielt werden.

Um für unterschiedliche Pipettenspitzen Vorsorge treffen zu können, kann es sich empfehlen, dass im Verfahrensschritt b) ein auf die jeweils verwendete Pipettenspitze abgestimmter Adapter verwendet wird. Insbesondere empfiehlt es sich, dass Adapter für verschiedene Pipettenspitzen dasselbe Anschlussvolumen aufweisen. Dies gilt in entsprechender Weise auch für mehrkanalige Kolbenhubpipetten. Deren Adapter mit der entsprechenden oder einem Bruchteil der Anzahl von Aufnahmen für die Pipettenspitzen werden verwendet. Bei inehrkanaligen Kolbenhubpipetten, deren Kanäle einer Einzelprüfung unterzogen werden sollen, können einzeln und jeder Kanal für sich geprüft werden. Um diesen Vorgang zu verkürzen ist eine Dichtigkeits-Prüfeinrichtung mit eiuem Adapter von Vorteil, der einzeln über Ventile zuschaltbar Anschlussvolumina mit oder ohne entsprechend angeschlossene Drucksensoren hat und verwendet wird. Die Verwendung unterschiedlicher Adapter für unterschiedliche Pipettenspitzen ist obligatorisch. Die Adapter zu kodieren und durch die Dichtigkeits-Prüfvorrichtung automatisch zu erfassen, hat sich als vorteilhaft in der Fehlervermeidung erwiesen.

ßereits zuvor ist darauf hingewiesen worden, dass die Totvolumina verschiedener Pipetten und Pipettenspitzen bei unterschiedlichen zu pipettierenden Volumina, Formen und Konstruktionen der Pipettenspitzen und Pipetten schwanken können. Das hat erheblichen Einfluss auf die Messergebnisse der Dichtigkeitsprüfung. Deshalb empfiehlt es sich, vor der eigentlichen Dichtigkeitsprüfung im erfindungsgemäßen Verfahren zur Dichtigkeitsprüfung eine Typbestimmung der Pipette und/oder Pipettenspitze vor dem Verfahrensschritt a) vorzunehmen. An der Dichtigkeits-Prüfvorrichtung kann dazu eine Einstellung auf diese Komponenten vorgenommen werden. Diese Eingabe kann manuell erfolgen, jedoch von Vorteil ist, wenn mit einem Lesegerät an der Dichtigkeits-Prüfeinrichtung eine Kodierung an der Pipette und/oder Pipettenspitzen erfasst wird. Die Steuereinrichtung kann dann die Kodierung mit denen im Datenspeicher gespeicherten Kodierungen vergleichen und die entsprechende Einstellung ermitteln. Bevorzugt sind die Werte verschiedener bekannter Pipetten und/oder Pipettenspitzen in dem Datenspeicher der Dichtigkeits-Prüfvorrichtung abgelegt und können vom Bediener ausgewählt werden.

Besondere Bedeutung kommt der Lehre des Anspruchs 8 zu, die Verfahrensschritte beschreibt, die im erfindungsgemäßen Verfahren vor dem Verfahrensschritt a) ablaufen. Auf diese Weise kann man Referenzwerte für die spezielle, nunmehr ausgemessene Pipettenspitze auswählen, die dann im Verfahrensschritt f) genutzt werden können. Dabei wird vereinfachend unterstellt, dass unterschiedliche Pipettenspitzen einen individuellen Unterdruck im Ansaugvorgang durch die Vakuumpumpe der Prüfeinrichtung generieren, die Rückschlüsse auf dort die einzusetzenden Pipetten erlauben.

Im Datenspeicher der Dichtigkeits-Prüfeinrichtung können die Druckanstiegsprofile und der Gleichgewichtsdruck für verschiedene Pipettenspitzen und Pipetten als Referenzwert hinterlegt sein, die dann in einem Auswahlverfahren vor dem Verfahrensschritt c) erkannt und automatisch ausgewählt werden können. Im Ergebnis ist die Bestimmung von gebrauchsfähig/nicht-gebrauchsfähig mit einer höheren Genauigkeit möglich.

In vorteilhafter Weise können Verfahrensschritte vor dem Verfahrensschritt c) wiederholt ablaufen, wobei an der Dichtigkeits-Prüfeinrichtung parallel zu der Pipette Zusatzvolumina bekannter Größe angeschlossen werden. Mit dem Vergleich der Zeitdauer für das Evakuieren des so erzeugten unterschiedlichen Anschlussvolumens kann das Totvolumen ermittelt und die Pipette ausgewählt werden.

Für eine genaue Dichtigkeitsprüfung wird der Messdruck vor dem Verfahrensschritt c) in Abhängigkeit des Nenn-, Anschluss- und Zusatzvolumens sowie des Spitzentyps bestimmt.

Grundsätzlich ist es möglich, mittels des erfindungsgemäßen Verfahrens eine breite Palette von Pipetten und Pipettenspitzen unterschiedlicher Volumina zu prüfen. Es kann sich allerdings empfehlen, eine Gruppenbildung vorzunehmen, wozu voranstehend einiges ausgeführt worden ist.

Wie bereits zuvor erläutert worden ist, ist Gegenstand der Erfindung auch eine entsprechende Dichtigkeits-Prüfeinrichtung zur Dichtigkeitsprüfung von handgehaltenen, einkanaligen oder mehrkanaligen Kolbenhubpipetten, vorzugsweise solchen mit Luftpolster. Diese Dichtigkeits-Prüfeinrichtung ist durch die Merkmale von Anspruch 10 gekennzeichnet.

Für die Vorrichtung gelten ähnliche Überlegungen wie zuvor für das erfindungsgemäße Verfahren dargestellt. Dementsprechend darf auf die voranstehenden Ausführungen verwiesen werden. Im Übrigen wird die Vorrichtung nachfolgend anhand der Erläuterungen eines bevorzugten Ausführungsbeispiels der Erfindung mit Bezugnahme auf die Zeichnung detailliert erläutert. Dabei werden alle Vorrichtungsansprüche im Einzelnen behandelt.

Schließlich ist Gegenstand der Erfindung auch ein System aus Dichtigkeits-Prüfeinrichtung und Adaptern. Auch dieses System wird im Zuge der Erläuterung des Ausführungsbeispiels anhand der Zeichnung näher behandelt.

Die einzige Figur der Zeichnung zeigt ein Ausführungsbeispiel einer Prüfeinrichtung 1 zur Dichtigkeitsprüfung von handgehaltenen, einkanaligen oder mehrkanaligen Kolbenhubpipetten 2, vorzugsweise solchen mit Luftpolster (wie auch hier dargestellt). Mittels dieser Dichtigkeits-Prüfeinrichtung 1 kann eine handgehaltene Kolbenhubpipette 2 extern auf Dichtigkeit geprüft werden, wobei auf die Pipette 2 eine zu dieser Pipette 2 passende Pipettenspitze 3 aufgesteckt ist. Die Messung erfolgt bei aufgesteckter Pipettenspitze 3 und von außen an der Pipettenspitze 3 angreifend.

Die Dichtigkeits-Prüfeinrichtung 1 weist im dargestellten Ausführungsbeispiel zunächst ein das System umschließendes Gehäuse 4 auf. Im Gehäuse 4 befindet sich eine Vakuumpumpe 5, die von einem elektrischen Antriebsmotor 6, ggf. über ein Untersetzungsgetriebe, oder auch manuell angetrieben wird. Bei der Vakuumpumpe 5 handelt es sich im dargestellten Ausführungsbeispiel um eine Membranpumpe, grundsätzlich sind aber auch andere Pumpen, beispielsweise eine Kolbenpumpe oder eine Schlauchpumpe einsetzbar. Im dargestellten Ausführungsbeispiel und nach bevorzugter Ausführung ist der Membranpumpe 5 ansaugseitig zusätzlich ein Ventil 7 vorgeschaltet.

Teil der Dichtigkeits-Prüfeinrichtung 1 ist auch eine Aufnahme 8 zum abgedichteten Anschließen der Pipettenspitze 3. Es können auch mehrere Aufnahmen zum gleichzeitigen Anschließen mehrerer Pipettenspitzen einer mehrkanaligen Kolbenhubpipette vorgesehen sein. Zwischen der Aufnahme 8 und der Vakuumpumpe 5 bzw. dem Ventil 7 erstreckt sich ein Leitungssystem 9.

Vorgesehen ist hier und bevorzugt eine elektronische Steuereinrichtung 10, ein der elektronischen Steuereinrichtung 10 zugeordneter, nicht flüchtiger Datenspeicher 11 und ein messtechnisch an das Leitungssystem 9 und - hier - auswertungstechnisch an die Steuereinrichtung 10 angeschlossener Drucksensor 12. Der Abschnitt zwischen Aufnahme 8 und Ventil 7 bzw. Vakuumpumpe 5 mit den an Verzweigungen abgehenden Anschlüssen bildet ein bestimmtes Anschlussvolumen der Dichtigkeits-Prüfeinrichtung 1.

Wesentlich ist für die erfindungsgemäße Dichtigkeits-Prüfeinrichtung 1, dass sich der Drucksensor 12 an das Anschlussvolumen im Leitungssystem 9 anschließt dessen Druckverhältnisse ausgemessen werden, um dadurch auf die Druckverhältnisse in der Pipettenspitze 3 an der Pipette 2 rückschließen zu können.

Bei allen Prüfmethoden, die mit schneller Änderung des Druckes in einem Messvolumen einhergehen, ist die adiabatische Erwärmung oder Abkühlung der bewegten Luftmasse in mehr oder weniger großem Ausmaß zu berücksichtigen. Dies kann man durch die Einführung einer Relaxationsphase zu Beginn des Messvorganges tun. Ebenso ist eine Korrektur des Messsignals möglich, die die thermisch bedingten Effekte kompensiert.

Jedoch sind Maßnahmen im Anschlussvolumen messtechnisch sinnvoller, die eine schnellere Anpassung der Temperatur bewirken, wie beispielsweise Füllmassen mit einem Oberfläche/Volumen-Verhältnis von mehr als 3, besser mehr als 20. Als besonders effektiv und gebrauchsfähig hat sich Edelstahlwolle bewährt, die die Lufttemperatur quasi unmittelbar korrigiert. Deren Verhältnis errechnet sich aus dem kreisförmigen Querschnitt folgendermaßen:

$$d \cdot \pi \cdot l \; / \; d^2 \cdot \pi/4 \cdot l \quad \text{also} \quad 4d \; / \; d^2$$

Die erfindungsgemäße Dichtigkeits-Prüfeinrichtung 1 arbeitet so, dass bei gemäß der einzigen Figur angeschlossener Kolbenhubpipette 2 die Pipette 2 mit der Pipettenspitze 3 auf einen Messdruck unterhalb des Atmosphärendrucks evakuiert wird. Dann wird die Vakuumpumpe 5 abgeschaltet und, hier, mittels des Ventils 7 vom Leitungssystem 9 abgekuppelt. Das Anschlussvolumen im Leitungssystem 9 ist dadurch innerhalb der Dichtigkeits-Prüfeinrichtung 1 abgedichtet. Mittels des Drucksensors 12 wird nun der Druck im Anschlussvolumen während einer bestimmten Zeitspanne und/oder nach einer bestimmten Zeitspanne gemessen.

In der nicht dargestellten, einfachsten Ausführung einer Dichtigkeits-Prüfeinrichtung 1 erfolgt deren Steuerung manuell und der Drucksensor 12 ist mit einer Anzeigeeinrichtung 13 direkt gekoppelt. Die Anzeigeeinrichtung 13 kann dabei so eingestellt sein, dass die Signale des Drucksensors 12 Anzeigeänderungen auslösen, die den Gebrauchszustand der geprüften Kolbenhubpipette 2 unmittelbar, beispielsweise mit farbigen Signallampchen, anzeigen.

Bei der im Ausführungsbeispiel dargestellten Dichtigkeits-Prüfeinrichtung 1 mit der elektronischen Steuereinrichtung 10 wird das Prüfverfahren mit gespeicherten Werte gesteuert und werden Algorithmen mit den gespeicherten und veränderlichen Werten abgearbeitet, statt eine manuelle Einstellung auf die Pipette 2 vorzunehmen. Die Steuereinrichtung 10 ermittelt hierbei aus gemessenen Druckanstiegen das Ergebnis, ob also die ausgemessene Kolbenhubpipette 2 mit Pipettenspitze 3 hinreichend dicht ist oder nicht. Die elektronische Steuereinrichtung 10 steuert die Anzeigeeinrichtung 13 dahingehend an, so dass auch insoweit der Gebrauchszustand bevorzugt in mehreren Stufen angezeigt wird. Eine solche Anzeige kann mit farbigen optischen Elementen arbeiten, aber auch mit Symbolen oder einer Klartext-Angabe.

Eine zweckmäßige automatisierte Verfahrensweise kann auch so ablaufen, dass der ermittelte Druckanstieg mittels der Steuereinrichtung 10 mit einem in dem Datenspeicher 11 gespeicherten Referenzwert oder gespeicherten Referenzwerten verglichen wird. Abhängig vom Ergebnis dieses Vergleichs wird dann, ausgelöst von der Steuereinrichtung 10, die Pipette 2 als hinreichend dicht/gebrauchsfähig oder nicht hinreichend dicht/nicht gebrauchsfähig bewertet.

Das dargestellte Ausführungsbeispiel der Dichtigkeits-Prüfeinrichtung 1 sieht vor, dass eine Bewertung der Pipette 2 in diskreten Stufen erfolgt. Genauer gesagt, sieht dieses Ausführungsbeispiel vor, dass bei der Bewertung in diskreten Stufen eine mittlere Stufe für eine Bewertung der Pipette 2 als geringfügig undicht/noch gebrauchsfähig vorgesehen ist. Dies trägt der Tatsache Rechnung, dass es nämlich bei einem kleinen Leck möglich ist, ohne Auswirkung des Lecks die Pipettiergenauigkeit im Rahmen der Fehlergrenze einzuhalten,

Zweckmäßigerweise handelt es sich bei der Anzeigeeinrichtung 13 um eine optische Anzeige mit verschiedenen Symbolen, Farben und/oder Leuchtmitteln. Der Bediener bekommt mit dieser Anzeige 13 einfach mitgeteilt, ob sich die ausgemessene Pipette 2 mit Pipettenspitze 3 im Bereich beispielsweise "grün", "gelb", oder "rot" befindet und somit gebrauchsfähig, bedingt gebrauchsfähig oder nicht mehr gebrauchsfähig ist. Eine LCD-Anzeige ist dabei besonders günstig hinsichtlich des Energieverbrauchs.

Grundsätzlich ist auch eine akustische Anzeige realisierbar, Zweckmäßig ist auch eine kombinierte Anzeige optisch/akustisch.

Die Dichtigkeits-Prüfeinrichtung 1 hat überdies am Gehäuse 4 noch einen Ein-/Ausschalter 14, ebenso verbunden mit der Steuereinrichtung 10, sowie einen Starttaster 15 zum Starten entsprechender "Verfahrensabschnitte des mit dieser Vorrichtung realisierten erfindungsgemäßen Verfahrens zur Dichtigkeitsprüfung.

Dem Ventil 7 ansaugseitig vorgeschaltet ist im Übrigen ein Filter 16, eingesetzt in das Leitungssystem 9, hier außerhalb des Gehäuses 4 der Dichtigkeits-Prüfeinrichtung 1. Der Filter 16 soll das Eintreten von Verunreinigungen in die Dichtigkeits-Prüfeinrichtung 1 verhindern. Seine Anordnung außerhalb des Gehäuses 4 ist zweckmäßig, um den Filter 16 leicht auswechseln zu können. Ein weiterer Filter 16' ist vor dem Ventil 7' zur Belüftung des Anschlussvolumens angeordnet.

Das dargestellte und bevorzugte Ausführungsbeispiel einer Dichtigkeits-Prüfeinrichtung 1 zeichnet sich ferner dadurch aus, dass der Messdruck etwa 20 bis etwa 300 hPa, vorzugsweise etwa 50 bis 150 hPa unter Atmosphärendruck liegt. Entsprechend gilt, dass die Zeitspanne, nach der ein Druckanstieg ermittelt wird, zwischen ca. 3 s und ca. 60 s, vorzugsweise zwischen ca. 5 s und ca. 20 s, liegt. Schließlich empfiehlt es sich, dass als zulässiger Druckanstieg ein Druckanstieg von ca. 0,1 hPa bis ca. 50 hPa vorgesehen ist.

Der Drucksensor 12 kann im zuvor ausführlich erläuterten, bevorzugten und nicht einschränkend zu verstehenden Ausführungsbeispiel eine Auflösung von etwa 0,01 hPa bis etwa 0,1 hPa haben. Das ist ein kostenmäßig günstiger, präzise arbeitender Drucksensor 12, der auf die hier vorliegenden Druckbereiche und Druckanstiege zweckmäßig abgestimmt ist.

Bereits oben ist erläutert worden, dass es auf die Größe des Anschlussvolumens der Dichtigkeits-Prüfeinrichtung 1 für die Präzision der Ermittlung des zulässigen Druckanstiegs ankommt. Das dargestellte und bevorzugte Ausführungsbeispiel zeichnet sich nun dadurch aus, dass die Dichtigkeits-Prüfeinrichtung 1 für zurzeit gebräuchliche Pipetten und Pipettenspitzen zwischen 10 μl und 10 ml ein Anschlussvolumen zwischen etwa 1,0 ml und etwa 200 ml aufweist. Für einen breiteren Einsatzbereich von Pipettenspitzen 3 und Kolbenhubpipetten 2 wird man möglicherweise mehrere umschaltbare Messbereiche vorsehen müssen.

Dem Anschlussvolumen ist im Weiteren mindestens ein Behälter 17 über ein Ventil 18 zuschaltbar. Der Behälter umschließt ein bestimmtes Zusatzvolumen, sodass das Anschlussvolumen insgesamt von etwa 1 ml auf etwa 200 ml vergrößert werden kann. Hierzu können weitere unterschiedlich voluminöse Behälter 17', 17" über ihre jeweiligen Ventile 18', 18" zugeschaltet werden. Es ist auch möglich mehrere und/oder unterschiedlich große Zusatzvolumina zuzuschalten, um das Anschlussvolumen auf das Totvolumen des zu prüfende Systems Pipette/Pipettenspitze abzustimmen.

Ein einmal evakuiertes Zusatzvolumen bzw. Behälter 17, 17', 17" der Dichtigkeits-Prüfeinrichtung wird bzw. werden im Betrieb nicht mehr belüftet. Dies verkürzt nicht nur die Zeit zum erneuten Evakuieren, sondern dient auch dazu um den bei diesen Druckänderungen adiabatischen Effekt auszugleichen.

Statt das Anschlussvolumen mit unterschiedlich voluminösen Behältern zu verändern, ist es auch möglich eine Verdrängereinrichtung anzuschließen. Diese könnte permanent mit dem Leitungssystem 9 verbunden sein. Die Verdrängereinrichtung, beispielsweise einer Kolben-/Zylinder-Einheit, die mittels eines Aktuators oder manuell am Stellantrieb für den Kolben betätigt wird, kann ihr Volumen verändern.

Das dargestellte und bevorzugte Ausführungsbeispiel zeigt hinsichtlich der Dichtigkeits-Prüfeinrichtung 1 noch eine Besonderheit dergestalt, dass die Aufnahme 8 in einem auswechselbaren Adapter 19 ausgebildet ist. Der Adapter 19 kann mittels einer Adapterkupplung 20 am Gehäuse 4 der Dichtigkeits-Prüfeinrichtung 1 verwechslungsfrei angekuppelt werden. Somit können verschiedene Adapter 19 für verschiedene Pipetten 2 mit Pipettenspitzen 3 verwendet werden. Interessant dabei ist, dass nach bevorzugter Lehre vorzusehen ist, dass Adapter 19 mit unterschiedlichen Aufnahmen 8 für unterschiedliche Pipettenspitzen 3 im Wesentlichen dasselbe Anschlussvolumen aufweisen.

Selbstverständlich wird man nicht vermeiden können, dass bei einem Adapter 19 für eine Mehrkanal-Kolbenhubpipette, insbesondere Luftpolster-Kolbenhubpipette 2, das Anschlussvolumen des Leitungssystems 9 größer ist als bei einer einkanaligen Ausführung. Das muss man bei der Ausführung entsprechend berücksichtigen. Möglicherweise kann man auch eine mehrkanalige Auswertung vornehmen, so dass je Aufnahme 8 im mehrkanaligen Adapter 19 ein eigenes Leitungssystem 9 mit einem eigenen Drucksensor 12 vorgesehen ist.

Das dargestellte und bevorzugte Ausführungsbeispiel zeigt im Übrigen, dass unterschiedliche Adapter 19 unterschiedlich kodiert sind. Der Adapter 19 weist dazu eine Kodierung 21 auf, die mechanisch, optisch und/oder anderweit berührungslos ablesbar, beispielsweise magnetisch ist. Ein entsprechender Sensor 22 für die Kodierung 21 des Adapters 19 befindet sich am Gehäuse 4 der Dichtigkeits-Prüfeinrichtung 1 und ist zu Auswertungszwecken mit der Steuereinrichtung 10 verbunden.

Nach dem bevorzugten Verfahren wird vor dem eigentlichen Vorgang der Dichtigkeitsprüfung der Kolbenhubpipette 2, also vor dem Verfahrensschritt c), eine Einstellung auf die Pipette und/oder Pipettenspitzen vorgenommen, wobei die Werte aus dem Datenspeicher automatisch ausgewählt werden. Der Pipettentyp, also welche Volumengröße, Ein- oder Mehrkanal usw. kann bereits in dem Datenspeicher vorliegen, so dass nur eine Auswahl getroffen werden braucht.

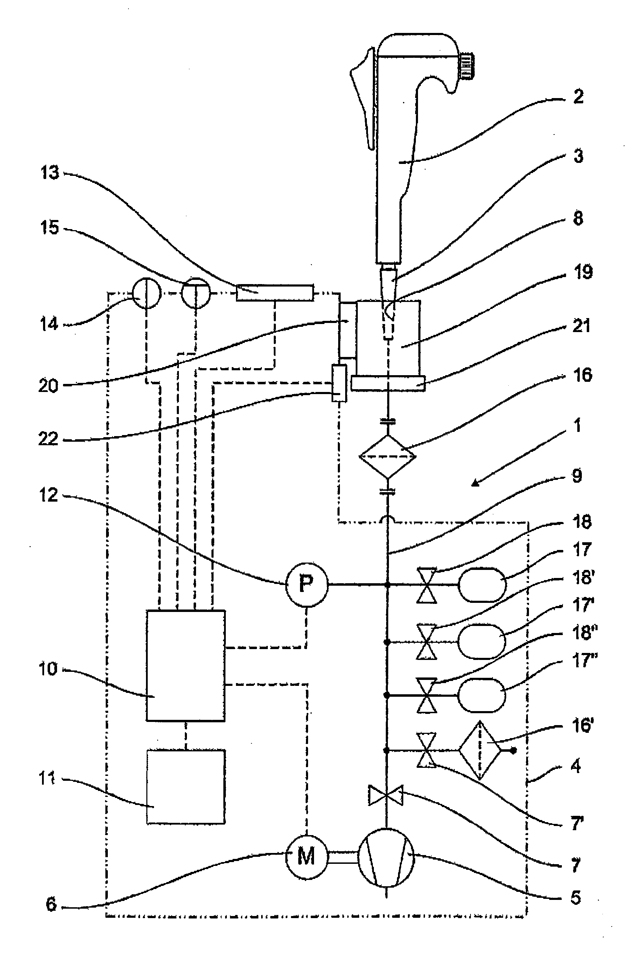

Die Einstellung auf die Pipette und/oder Pipettenspitzen kann auch mittels Datenübertragung erfolgen. Dazu hat die Prüfeinrichtung ein Lesegerät (was allerdings Fig. 1 nicht zeigt), um eine an der Pipette 2 oder auf der Pipettenspitze 3 angeordnete Kodierung abzugreifen, und zwar direkt oder berührungslos. Beispielsweise kann die Pipettenspitze einen Barcode und die Pipette einen RFID-Chip, Transponder oder eine allgemeine Funkschnittstelle, wie sie in DE-A 199 11 397 zur uni- oder bidirektionalen Datenübertragung vorgesehen ist, tragen. Mit der Steuereinrichtung wird die Kodierung mit im Datenspeicher gespeicherten Kodierungen verglichen, die entsprechende Einstellung ermittelt und zur weiteren Verwendung übernommen. Die Kodierung oder die übermittelten Datenpakete können im Weiteren beispielsweise und je nach Kapazität den Typ, Größe, Beschaffenheit, Seriennummer, Chronologie der Prüfungen und Kalibrierung der Prüflinge beinhalten.

Mit der erfindungsgemäßen Dichtigkeits-Prüfeinrichtung 1 lässt sich im übrigen zur Erhöhung der Messgenauigkeit so arbeiten, dass die Dichtigkeits-Prüfeinrichtung 1 in der Weise betreibbar ist, dass eine interessierende, zu der zu prüfenden Kolbenhubpipette passende Pipettenspitze 3 als solche an die Aufnahme 8 anschließbar ist, dass das Anschlussvolumen der Prüfeinrichtung 1 bei angeschlossener Pipettenspitze 3 ohne Kolbenhubpipette 2 bei laufender Vakuumpumpe 5 auf einen sich einstellenden Gleichgewichtsdruck unterhalb des Atmosphärendrucks evakuierbar ist, und dass aus dem sich einstellenden Gleichgewichtsdruck mittels der elektronischen Steuereinrichtung 10 der Spitzentyp der Pipettenspitze 3 und darüber ein bestimmter zulässiger Druckanstieg für die passende Kolbenhubpipette 2 ermittelbar und als Referenzwert in der Steuereinrichtung 10 speicherbar oder zur Auswahl eines entsprechend gespeicherten Referenzwertes nutzbar ist. Im Einzelnen ist dazu im allgemeinen Teil der Beschreibung hinsichtlich des entsprechenden Verfahrensanspruchs schon eine ausführliche Erläuterung erfolgt. Wesentlich ist, dass damit ein Indikator für die Art der Pipettenspitze 3 und damit ein Rückschluss auf die angeschlossene Kolbenhubpipette 2 möglich ist.

Das bevorzugte Verfahren mit vorheriger Kalibrierung der Dichtigkeits-Prüfeinrichtung 1 auf eine bestimmte Pipettenspitze 3 berücksichtigt, dass Pipettenspitzen 3 unterschiedliche Spitzenöffnungen haben. Durch deren mehr oder weniger großen Strömungswiderstand der beim Pipettieren einströmenden Flüssigkeit stellt sich in der Spitze, also im Totvolumen, ein unterschiedlicher Unterdruck ein. Die Pipettenspitze 3 wird dazu alleine in den Adapter 19 gesteckt. Mit dem Starttaster 15 wird dieser Prüfvorgang gestartet. Es kann auch nur ein einfaches Anschalten mit dem Schalter 14 erfolgen. Aus dem Signal des Drucksensors 12 kann die Steuereinrichtung 10 schließen, dass nur die Pipettenspitze 3 geprüft wird. Die konstant laufende Vakuumpumpe 5 leistet bei offener Pipettenspitze 3 einen bestimmten Unterdruck im Anschlussvolumen, also in dem Leitungssystem 9, der vom Drucksensor 12 gemessen wird. Dieser Unterdruck sollte der minimale Messdruck sein. Aus diesem Messdruck bestimmt die Steuereinrichtung 10 die Sollwerte für den zulässigen Druckanstieg oder wählt diese aus elektronisch hinterlegten Daten passend aus.

Im Weiteren kann mit der Dichtigkeits-Prüfeinrichtung 1 das Totvolumen der Kolbenhubpipette 2 ermittelt werden. Hierzu wird die Pipette 2 auf einen bestimmten Unterdruck evakuiert. Nach dem Belüften des Anschluss- und Totvolumens über das Ventil 7' wird das Anschlussvolumen um ein Zusatzvolumen vergrößert. Ein Ventil 18 zu einem Behälter 17 wird geöffnet und das System erneut auf den Unterdruck evakuiert. Durch Vergleich der Abpumpzeiten und den bekannten Anschluss- und Zusatzvolumen lässt sich das Totvolumen der Pipette 2 berechnen. Das Totvolumen beeinflusst den Messdruck, der beim dynamischen Prüfen der Pipette schwankt, und bestimmt das nötige Volumen des Leitungssystems, das ggf. durch die Zusatzvolumen erhöht werden muss.

Gegenstand der Erfindung ist schließlich auch ein System zur Dichtigkeitsprüfung von Kolbenhubpipetten mit einer Dichtigkeits-Prüfeinrichtung 1 und Adaptern für verschiedene Pipettenspitzen 3. Dessen Besonderheiten ergeben sich aus den voranstehenden Ausführungen in entsprechender Weise.

**Patentansprüche**

**1.** Verfahren zur Dichtigkeitsprüfung von handgehaltenen, einkanaligen oder mehrkanaligen Kolbenhubpipetten, vorzugsweise von solchen mit Luftpolster, mit folgenden Verfahrensschritten:

a) Auf die Pipette wird eine zu dieser Pipette passende Pipettenspitze aufgesteckt.

b) Die Pipettenspitze wird an eine Dichtigkeits-Prüfeinrichtung angeschlossen, die eine Vakuumpumpe, einen Drucksensor und eine Anzeigeeinrichtung aufweist.

c) Mittels der Dichtigkeits-Prüfeinrichtung wird die Pipette mit der Pipettenspitze sowie ein Anschlussvolumen in der Dichtigkeits-Prüfeinrichtung mittels einer Vakuumpumpe auf einen Messdruck unterhalb des Atmosphärendrucks evakuiert.

d) Bei angehaltener oder abgekoppelter Vakuumpumpe und abgedichtetem Anschlussvolumen wird mittels des Drucksensors der Druck im Anschlussvolumen während einer bestimmten Zeitspanne und/oder nach einer bestimmten Zeitspanne gemessen und, vorzugsweise mittels einer elektronischen Steuereinrichtung, ein eventueller Druckanstieg ermittelt, e) Abhängig vom im Verfahrensschritt d) ermittelten Druckanstieg wird mittels der Anzeigeeinrichtung die Pipette als hinreichend dicht/gebrauchsfähig oder nicht hinreichend dicht/nicht gebrauchsfähig bewertet. Alternativ zum Verfahrensschritt e):

f) Der ermittelte Druckanstieg wird mittels der Steuereinrichtung mit einem in einem Datenspeicher gespeicherten Referenzwert oder dort gespeicherten Referenzwerten verglichen.

g) Abhängig vom Ergebnis des Vergleichs im Verfahrensschritt f) wird mittels der Anzeigeeinrichtung die Pipette als hinreichend dicht/gebrauchsfähig oder nicht hinreichend dicht/nicht gebrauchsfähig bewertet.

**2.** Verfahren nach Anspruch 1, **dadurch gekennzeichnet,**
**dass** im Verfahrensschritt e) oder g) ein Druckanstieg in Abhängigkeit von der Pipette von ca. 0,1 hPa bis ca. 50 hPa als zulässig bewertet wird, und/oder
**dass** die Bewertung im Verfahrensschritt e) oder g) mittels der Anzeigeeinrichtung nur digital und/oder optisch, insbesondere mit verschiedenen Symbolen, Farben und/oder Leuchtmitteln, und/oder akustisch, insbesondere mit Tönen unterschiedlicher Frequenz erfolgt.

**3.** Verfahren nach Anspruch 1 oder 2, **dadurch gekennzeichnet,**
**dass** im Verfahrensschritt c) mit einem Messdruck von etwa 20 hPa bis etwa 300 hPa, vorzugsweise etwa 50 bis 150 hPa, unter Atmosphärendruck gearbeitet wird, und/oder
**dass** im Verfahrensschritt c) der Messdruck so gewählt ist, dass die Kolbenbewegung der Pipette in Ansaugrichtung möglich ist, und/oder
**dass** im Verfahrensschritt d) mit einer Zeitspanne von ca. 3 s bis ca. 60 s, vorzugsweise von ca, 5 s bis 20 s, gearbeitet wird.

**4.** Verfahren nach einem der Amprüche 1 bis 3, **dadurch gekennzeichnet,**
**dass** für Pipetten und Pipettenspitzen mit einem Nennvolumen zwischen 10 μl und 10 ml mit einer Dichtigkeits-Prüfeinrichtung gearbeitet wird, deren Anschlussvolumen durch ein oder mehrere Zusatzvolumina zwischen etwa 1,0 ml und etwa 200 ml durch ein Ventil, insbesondere in Verfahrensschritt c), zuschaltbar vergrößert wird,

wobei, vorzugsweise, das Anschlussvolumen der Dichtigkeits-Präfeinrichtung auf das Totvolumen des zu prüfenden Systems Pipette/Pipettenspitze abgestimmt ist und durch ein oder mehrere Zusatzvolumina mit unterschiedlich großen Volumen das Anschlussvolumen verändert wird,
wobei, weiter vorzugsweise, das Zusatzvolumen der Dichtigkeits-Prüfeinrichlung nach erstmaligem Evakuieren im Verfahrensschritt c) nicht mehr belüftet wird.

**5.** Verfahren nach einem der Ansprüche 1 bis 4, **dadurch gekennzeichnet,**
**dass** im Verfahrensschritt b) ein auf die jeweils verwendete Pipettenspitze abgestimmter Adapter verwendet wird, wobei, insbesondere, die Adapter für verschiedene Pipettenspitzen dasselbe Anschlussvolumen aufweisen.

**6.** Verfahren nach Anspruch 5, **dadurch gekennzeichnet,**
**dass** bei einer mehrkanaligen Kolbenhubpipette ein Adapter mit der entsprechenden oder einem Bruchteil der Anzahl von Aufnahmen für die Pipettenspitzen verwendet wird,
wobei, vorzugsweise, ein Adapter mit einzelnen je Pipettenspitze zuschaltbaren Anschlussvolumina mit oder ohne entsprechende Drucksensoren verwendet wird, und/oder
wobei, vorzugsweise, unterschiedliche Adapter unterschiedlich kodiert sind und die Kodierung des jeweils verwendeten Adapters von der Dichtigkeits-Prüfeinrichtung automatisch erfasst wird.

**7.** Verfahren nach einem der Ansprüche 1 bis 6, **dadurch gekennzeichnet,**
**dass** vor dem Verfahrensschritt a) an der Dichtigkeits-Prüfeinrichtung eine Einstellung auf die Pipette und/oder Pipettenspitzen vorgenommen wird oder mit einem Lesegerät an der Dichtigkeits-Prüfeinrichtung eine Kodierung an der Pipette und/oder Pipettenspitzen erfasst wird, mit der Steuereinrichtung die Kodierung mit denen im Datenspeicher gespeicherten Kodierungen verglichen wird und die entsprechende Einstellung ermittelt wird,
wobei, vorzugsweise, dabei zur Einstellung auf die Pipette und/oder Pipettenspitzen aus Werten verschiedener bekannter Pipetten aus dem Datenspeicher der Dichtigkeits-Prüfeinrichtung ausgewählt wird.

**8.** Verfahren nach einem der Ansprüche 1 bis 7, **dadurch gekennzeichnet, dass** vor dem Verfahrensschritt a) folgende Verfahrensschritte ablaufen:

h) Die interessierende, zu der zu prüfenden Pipette passende Pipettenspitze als solche wird an die Dichtigkeits-Prüfeinrichtung angeschlossen.
i) Ohne eine an die Pipettenspitze angeschlossene Pipette wird mittels der Dichtigkeits-Prüfeinrichtung das Anschlussvolumen bei laufender Vakuumpumpe auf einen sich einstellenden Gleichgewichtsdruck unterhalb des Atmosphärendrucks evakuiert.
k) Aus dem sich einstellenden Gieichgewichtsdruck wird mittels der Steuereinrichtung der Spitzentyp und darüber der Messdruck und ggf, ein zulässiger Druckanstieg ermittelt und als Referenzwert gespeichert oder zur Auswahl eines gespeicherten Referenzwertes genutzt.

**9.** Verfahren nach Anspruch 8, **dadurch gekennzeichnet,**
**dass** vor dem Verfahrensschritt c) die Pipette und/oder Pipettenspitzen von der Dichtigkeits-Prüfeitnichtung erkannt wird und die Werte aus dem Datenspeicher automatisch ausgewählt werden oder
**dass** mit der Zeitdauer für das Evakuieren des Anschluss- und des Totvolumens der Pipette und ggf. dem Vergleich mit dem wiederholten Evakuieren eines parallel zu der Pipette angeschlossenen Zusatzvolumens bekannter Größe die Pipette ermittelt und ausgewählt wird oder
**dass** der Messdruck in Abhängigkeit des Nenn-, Anschluss- und Zusatzvolumens sowie des Spitzentyps bestimmt wird.

**10.** Dichtigkeits-Prüfeinrichtung zur Dichtigkeitsprüfung von handgehaltenen, einkanaligen oder mehrkanaligen Kolbenhubpipetten, vorzugsweise solchen mit Luftpolster,
mit einer, vorzugsweise motorisch angetriebenen Vakuumpumpe (5), ggf. einem der Vakuumpumpe (5) ansaugseitig vorgeschalteten Ventil (7), einer Aufnahme (8) zum abgedichteten Anschließen einer Pipetteuspitze (3) oder mehreren Aufnahmen (8) zum gleichzeitigen abgedichteten Anschließen mehrerer Pipettenspitzen (3), einem Leitungssystem (9) zwischen Aufnahme (8) und Vakuumpumpe (5) oder Ventil (7), vorzugsweise einer elektronischen Steuereinrichtung (10), vorzugsweise einem der elektronischen Steuereinrichtung (10) zugeordneten Datenspeicher (11), einem messtechnisch an das Leitungssystem (9) angeschlossenen und, sofern eine Steuereinrichtung (10) vorhanden ist, auswertungstechnisch an die Steuereinrichtung (10) angeschlossenen Drucksensor (12), und einer Anzeigeeinrichtung (13), wobei das Leitungssystem (9) mit anschließenden Abschnitten der Dichtigkeits-Prüfeinrichtung ein bestimmtes Anschlussvolumen bildet.

**11.** Einrichtung nach Anspruch 10, **dadurch gekennzeichnet,**

**dass** die an die Aufnahme (8) angeschlossene Pipettenspitze (3) mit Kolbenhubpipette (2) sowie das Anschlussvolumen im Leitungssystem (9) auf einen Messdruck unterhalb des Atmosphärendrucks mittels der, vorzugsweise motorisch angetriebenen Vakuumpumpe (5) evakuierbar ist,

**dass** bei angehaltener oder abgekoppelter Vakuumpumpe (5) und abgedichtetem Anschlussvolumen mittels des Drucksensors (12) der Druck im Anschlussvolumen während einer bestimmten Zeitspanne und/oder nach einer bestimmten Zeitspanne messbar und, vorzugsweise mittels der Steuereinrichtung (10), ein eventueller Druckanstieg ermittelbar ist,

**dass** schließlich aus dem ermittelten Druckanstieg mittels der Anzeigeeinrichtung (13) die Pipette als hinreichend dicht/gebrauchsfähig oder nicht hinreichend dicht/nicht gebrauchsfähig bewertbar ist oder

**dass** der ermittelte Druckanstieg mittels der Steuereinrichtung (10) mit einem im Datenspeicher (11) gespeicherten Referenzwert oder dort gespeicherten Referenzwerten vergleichbar ist und abhängig von dem Ergebnis dieses Vergleichs mittels der Anzeigeeinrichtung (13) die Pipette als hinreichend dicht/gebrauchsfähig oder nicht hinreichend dicht/nicht gebrauchsfähig bewertbar ist.

**12.** Einrichtung nach Anspruch 11, **dadurch gekennzeichnet,**

**dass** die Bewertung der Dichtigkeit der Kolbenhubpipette (2) mit der Pipettenspitze (3) mittels der Anzeigeeinrichtung (13) nur digital erfolgt, und/oder als optische Anzeige, insbesondere mit verschiedenen Symbolen, Farben und/oder Leuchtmitteln, ausgeführt ist, und/oder

akustisch arbeitet, insbesondere mit Tönen unterschiedlicher Frequenz, wobei die Anzeige vorzugsweise nur zwei oder drei Anzeigestufen aufweist.

**13.** Einrichtung nach einem der Ansprüche 10 bis 12, **dadurch gekennzeichnet,**

**dass** die Dichtigkeits-Prüfeinrichtung (1) für Pipetten und Pipettenspitzen mit einem Nennvolumen zwischen 10 $\mu$l und 10 ml ein ein Anschlussvolumen vergrößerndes, durch ein Ventil (18, 18', 18'') zuschaltbares Zusatzvolumen (17, 17', 17'') zwischen etwa 1,0 ml und etwa 200 ml aufweist,

wobei, insbesondere, das Anschlussvolumen der Dichtigkeits-Prüfeinrichtung (1) auf das Totvolumen des zu prüfenden Systems Pipette (2)/Pipettenspitze (3) abgestimint ist, und/oder

wobei, vorzugsweise, im Anschluss- und/oder Zusatzvolumen eine die Temperatur des Gasvolumens stabilisierende Masse angeordnet ist, deren Oberflächen/Volumen-Verhältnis vorzugsweise größer als 3, insbesondere größer als 20, ist.

**14.** Einrichtung nach einem der Ansprüche 10 bis 13, **dadurch gekennzeichnet,**

**dass** die Aufnahme (8) in einem auswechselbaren Adapter (19) ausgebildet ist, der Teil des Leitungssystems (9) ist, wobei, insbesondere, verschiedene Adapter (19) mit unterschiedlichen Aufnahmen (8) für unterschiedliche Pipettenspitzen (3) im Wesentlichen dasselbe Anschlussvolumen aufweisen, und/oder dass bei einer mehrkanaligen Kolbenhubpipette (2) ein Adapter (19) mit einer entsprechenden Anzahl von Aufnahmen (8) für die mehreren Pipettenspitzen (3) vorgesehen ist,

wobei, vorzugsweise, der Adapter (19) für mehrkanalige Kolbenhubpipetten (2) einzelnen je Pipettenspitze (3) zuschaltbare Anschlussvolumina mit oder ohne entsprechende Drucksensoren (12) aufweist.

**15.** System zur Dichtigkeitsprüfung von handgehaltenen, einkanaligen oder mehrkanaligen Kolbenhubpipetten, vorzugsweise solchen mit Luftpolster, mit einer Dichtigkeits-Prüfeinrichtung (1) und mindestens einem dazu passenden, eine Aufnahme (8) für eine Pipettenspitze (2) aufweisenden Adapter (19), der mit der Dichtigkeits-Prüfeinrichtung (1) auswechselbar verbindbar ist,

**dadurch gekennzeichnet,**

**dass** die Dichtigkeits-Prüfeinrichtung (1) nach einem der Ansprüche 10 bis 14 ausgeführt ist,

**Europäisches Patentamt**
**European Patent Office**
**Office européen des brevets**

## EUROPÄISCHER RECHERCHENBERICHT

**Nummer der Anmeldung**

EP 09 01 3570

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 109 513 A (SCHOTT DONALD E) 29. August 1978 (1978-08-29) * Zusammenfassung * * Abbildungen 1-3 * * Spalte 2, Zeile 3 - Zeile 11 * * Spalte 3, Zeile 20 - Spalte 7, Zeile 68 * | 1-15 | INV. G01M3/26 B01L3/02 G01N35/10 |
| | ----- | | |
| A | US 5 537 880 A (TAKEDA MASAAKI [JP] ET AL) 23. Juli 1996 (1996-07-23) * Zusammenfassung * * Abbildungen 1-3 * * Spalte 3, Zeile 25 - Spalte 12, Zeile 23 * | 1-15 | |
| | ----- | | |
| A | EP 1 785 731 A1 (ROCHE DIAGNOSTICS GMBH [DE]; HOFFMANN LA ROCHE [CH]) 16. Mai 2007 (2007-05-16) * das ganze Dokument * | 1,10 | |
| | ----- | | |
| X,P | Brinkmann: "Brinkmann Universal Pipette Tester" Internet citation, [Online] 3. Februar 2010 (2010-02-03), XP002566617 Gefunden im Internet: URL:http://www.brinkmann.com/products/pipe_UPT_de.asp> [gefunden am 2010-02-03] * das ganze Dokument * | 1,10 | RECHERCHIERTE SACHGEBIETE (IPC) G01M B01L G01N |
| | ----- | | |

Der vorliegende Recherchenbericht wurde für alle Patentansprüche erstellt

| Recherchenort | Abschlußdatum der Recherche | Prüfer |
|---|---|---|
| Den Haag | 3. Februar 2010 | Hallbäck, Ann-Sofie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 09 01 3570

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-02-2010

| Im Recherchenbericht angeführtes Patentdokument | | Datum der Veröffentlichung | Mitglied(er) der Patentfamilie | | Datum der Veröffentlichung |
|---|---|---|---|---|---|
| US 4109513 | A | 29-08-1978 | CA<br>GB | 1057977 A1<br>1564811 A | 10-07-1979<br>16-04-1980 |
| US 5537880 | A | 23-07-1996 | CA<br>EP<br>WO | 2221732 A1<br>0830610 A1<br>9641200 A1 | 19-12-1996<br>25-03-1998<br>19-12-1996 |
| EP 1785731 | A1 | 16-05-2007 | KEINE | | |

EPO FORM P0461

Für nähere Einzelheiten zu diesem Anhang : siehe Amtsblatt des Europäischen Patentamts, Nr.12/82

**EP 2 317 299 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3903241 A1
- DE 10013511 A1
- DE 69326773 T2
- DE 8230186 U1
- DE 3903142 A1
- DE 19911397 A